# EUROPEAN PATENT SPECIFICATION

(11) **EP 3 315 339 B1**
(45) Date of publication and mention of the grant of the patent: **15.05.2019**
(21) Application number: 17188653.4
(22) Date of filing: 30.08.2017
(51) Int. Cl.: B60J 7/08, B60J 7/06, B60J 7/20

(54) **HOUSING FOR A COVER SYSTEM**
GEHÄUSE FÜR EIN ABDECKUNGSSYSTEM
BOÎTIER POUR SYSTÈME DE COUVERTURE

(30) Priority: 26.10.2016 GB 201618128
(43) Date of publication of application: 02.05.2018
(73) Proprietor: Dawbarn and Sons Ltd, Wisbech, Cambs PE13 1RL (GB)
(72) Inventor: HARRINGTON, Benjamin William John, Wisbech, Cambridgeshire PE13 1RL (GB); TIMMS, Stuart Nicholas, Wisbech, Cambridgeshire PE13 1RL (GB)
(74) Representative: Appleyard Lees IP LLP

(56) References cited:
- WO-A1-2005/005186
- US-A1- 2010 219 656
- US-A1- 2014 021 736

## Description

The present disclosure relates to a housing.

In particular the disclosure is concerned with a housing for a transport container cover system.

### Background

It is known to transport loose product (for example recyclable waste, rock etc) in vehicle trailers. Commonly the trailer is provided with a tarpaulin to cover the product, thereby preventing the product from being blown out of the trailer and to prevent any moisture (for example, rain) entering the trailer and wetting the product. Tarpaulins may be attached manually, which requires an operator to work on the top and/or side of the trailer, which may be several metres high. Trailers are typically about fifteen metres long, and so this is time consuming and, especially in windy conditions, poses a health and safety risk.

Automated systems exist for pulling a tarpaulin over the top of trailers. US 2014/0021736 A1 (Chenowth) describes an example of the related art. Some comprise an actuator mounted at one end of trailer, the actuator being attached to a bar which is in turn attached to a tarpaulin. The actuator operates to move the bar, and hence draw the tarpaulin across the top of the trailer.

Although effective, such arrangements increase the overall operational height of the vehicle since the bar and actuator sit above the edge of a wall of the trailer. Additionally, since the actuator is external to the trailer, it can be seen from ground level which reduces the aesthetic appeal of the trailer, as well as exposing the mechanism to aerodynamic forces and foreign object risk while the trailer is in transit. Covers are not provided because this would add to the overall height of the cover system above the edge of the trailer wall.

Additional height is problematic because UK and European Regulations set limits on maximum trailer width and height which can only be extended by 50mm. Given that maximising trailer volumetric capacity is important, and there are limits on size, a solution according to the prior art which extends above the top of a trailer wall, can only be fitted at the expense of the height, and hence volumetric capacity, of the container, which is undesirable.

A system, with or without a cover, which extends above a top edge of a trailer wall is also problematic partly because it reduces the aerodynamic performance of the trailer, as well as providing a source of aerodynamic noise.

Hence an automated system which can deploy a tarpaulin over the top of a trailer which can be operated remotely by a user, which does not increase the width or the height of the vehicle trailer beyond UK and European Regulations, and provides shielding for moving parts from aerodynamic forces and foreign object risk, is highly desirable.

### Summary

According to the present disclosure there is provided an apparatus and method as set forth in the appended claims. Other features of the invention will be apparent from the dependent claims, and the description which follows.

Accordingly there is provided a housing for a transport container cover system, the container having longitudinal side walls and a transverse end wall which define an opening on the top side of the container; the container cover system having an actuator coupled to a sheet guiding rod which extends along the longitudinal direction of the container across the opening; the housing being provided on an end wall of the container, and the housing comprising : a panel provided with a recess for receiving the cover system actuator.

The panel comprises : an upper surface along part of which the rod is operable to travel; a groove for receiving the sheet guiding rod; and the panel recess comprises : a primary region for receiving the actuator.

The tension arm may extend away from the actuator.

The panel recess may further comprise : a channel extending away from the primary region in a first direction and configured to receive the tension arm; and a ramp which extends from the primary region away from the channel and towards the panel upper surface, the ramp configured to guide the tension arm from the channel to the panel upper surface.

The panel recess may further comprise : a supply channel region which extends away from the primary region in a second direction, and the supply channel is configured to receive supply cables/pipes for the operation of the actuator.

The panel may extend along at least part of the length of the container end wall.

The housing may further comprise : a front wall which extends from a leading edge of the panel; and side walls which extend from side edges of the panel; such that the front walls and side walls surround the periphery of the panel.

There may also be provided a cover system for a transport container : the container having longitudinal side walls and a transverse end wall which define an opening on the top side of the container; and the cover system may comprise : an actuator coupled to a sheet guiding rod which extends along the longitudinal direction of the container over the opening; and a housing according to the present disclosure.

The cover system may further comprise : a support structure provided distal to the transverse end wall and towards the opposite end of the side walls to which the housing is provided; the support structure defining a further groove for receiving the sheet guiding rod; the further groove being substantially aligned in the longitudinal direction of the container with the sheet guiding rod groove provided in the housing.

The cover system may further comprise a sheet for covering at least part of the container opening, the sheet having : a top surface which faces away from the container when covering the container opening; and a rear surface which faces towards the container when covering the container opening; the sheet being coupled to the sheet guiding rod in at least one region between edges of the sheet and along at least part of the length of the sheet guiding rod, the sheet extending transverse from the longitudinal direction of the rod to its edges towards, or at, the side walls of the container.

The sheet may be coupled to the sheet guiding rod in a region substantially half way between the edges of the sheet.

The sheet guide rod may be coupled to the rear surface of the sheet.

The sheet guide rod may be located in a cavity between the rear surface and the top surface of the sheet.

The actuator may be operable to rotate the sheet guiding rod to thereby wind the sheet onto/off the sheet guiding rod to thereby draw the sheet between : a closed configuration in which the sheet covers the container opening, and an open configuration in which the container opening is exposed.

The cover system may further comprise a lid configured to cover the panel.

There may also be provided a method of operation of a cover system according to the present disclosure wherein the actuator is controlled to rotate the sheet guiding rod to wind the sheet onto/off the sheet guiding rod, and thereby draw the sheet between : a closed configuration in which the sheet covers the opening, and an open configuration in which the container opening is exposed.

There may also be provided a transport container for a vehicle comprising : longitudinal side walls and a transverse end wall which define an opening on the top side of the container; and a cover system according to the present disclosure.

Hence there may be provided a housing for a transport container cover system, an automated cover system with a housing and a transport container for a vehicle, which provides a means for covering and uncovering a trailer/container, which may be provided without limiting the maximum trailer size permitted by UK and European regulations, and which provides protection for moving parts of the system as well as increasing the aesthetic appeal of the system.

### Brief Description of the Drawings

Examples of the present disclosure will now be described with reference to the accompanying drawings, in which:
Figure 1 shows a side view of a vehicle and transport container according to the present disclosure;
Figure 2 shows a perspective view of the transport container, with a cover system according to the present disclosure in a closed configuration, and as shown in Figure 1;
Figure 3 shows a plan view of the cover system, with a housing according to the present disclosure, and shown in Figure 2;
Figure 4 shows a perspective view of a region of the cover system and housing shown in Figures 2, 3;
Figure 5 shows a plan view of the arrangement shown in Figure 4;
Figure 6 shows a view of an end wall of the transport container with the cover system;
Figure 7 shows the same view as Figure 6 with a part sectional view of the cover system and housing;
Figure 8 shows an enlarged view of a detail of the housing and cover system shown in Figure 7;
Figure 9 shows a view of a side wall of the transport container with the cover system;
Figure 10 shows a view similar to that of Figure 2, with the cover system in an open configuration;
Figure 11 shows a view similar to that of Figure 7, with the cover system in an open configuration;
Figure 12 shows an enlarged view of a region of the cover system as shown in Figure 11;
Figures 13, 14 shows an alternative arrangement to that shown in Figures 4, 5 and as according to the present disclosure; and
Figures 15 to 18 show an alternative arrangement to that shown in Figures 1, 2, and how it may be operated, according to the present disclosure.

### Detailed Description

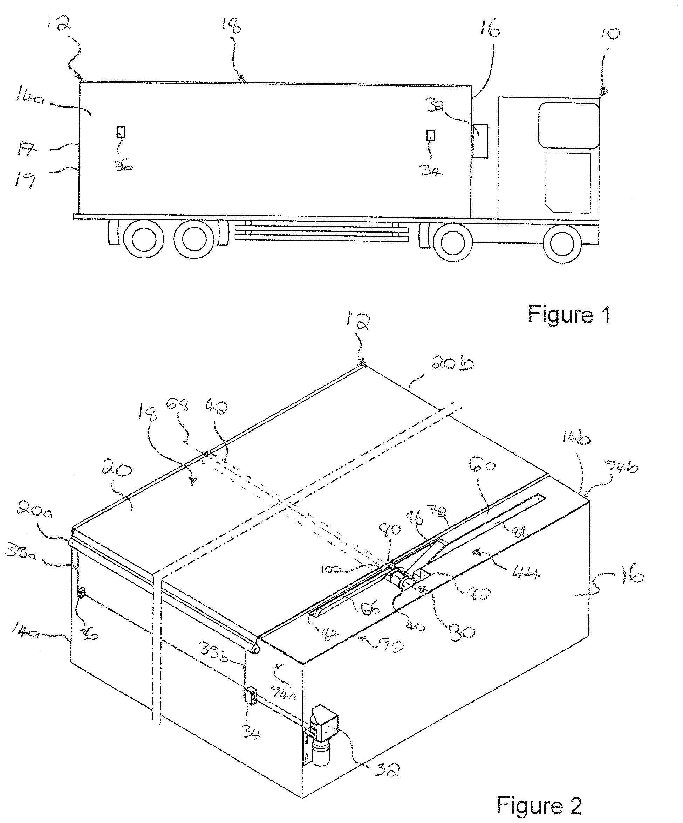

Figure 1 shows a vehicle 10 (e.g. a tractor unit) with a transport container 12 (e.g. trailer) according to the present disclosure. The transport container 12 comprises longitudinal side walls 14a, 14b and a transverse end wall 16 which define an opening 18 on the top side of the container 12. The container 12 may also comprise an end wall 17 and/or door 19 at the end opposite the end wall 16. Figure 2 shows a perspective view of the transport container 12, which in this and later figures has been truncated in size to omit unnecessary detail. Figure 2 shows a cover 20 (for example a sheet or tarpaulin) which covers the opening 18. Put another way, underneath the cover 20 is a container opening 18 through which a product may be entered into the trailer container 12. The cover 20 may extend the full length of the container 12 and its opening 20. The transport container 12 comprises a cover system indicated generally as "30" in Figure 2, shown in a closed configuration.

The cover system 30 may include a tensioning system 32, which in the example shown is mounted on the end wall 16 with guide features 34, 36 from which webbing straps 33a, 33b (or ropes, or such like) may extend to an edge 20a of the sheet 20. The tensioning system 32 may operate with the cover system 30 to maintain tension in the cover sheet 20 as it is drawn across the top of the container 12. The tensioning system 32 may be of a conventional kind and hence will not be described in detail.

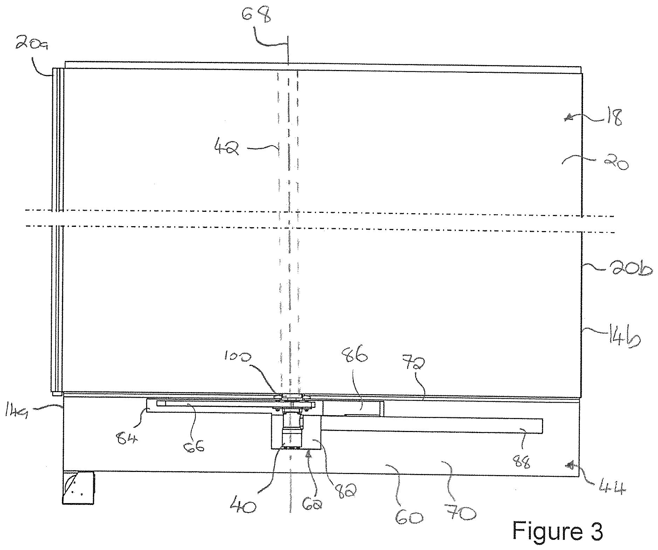

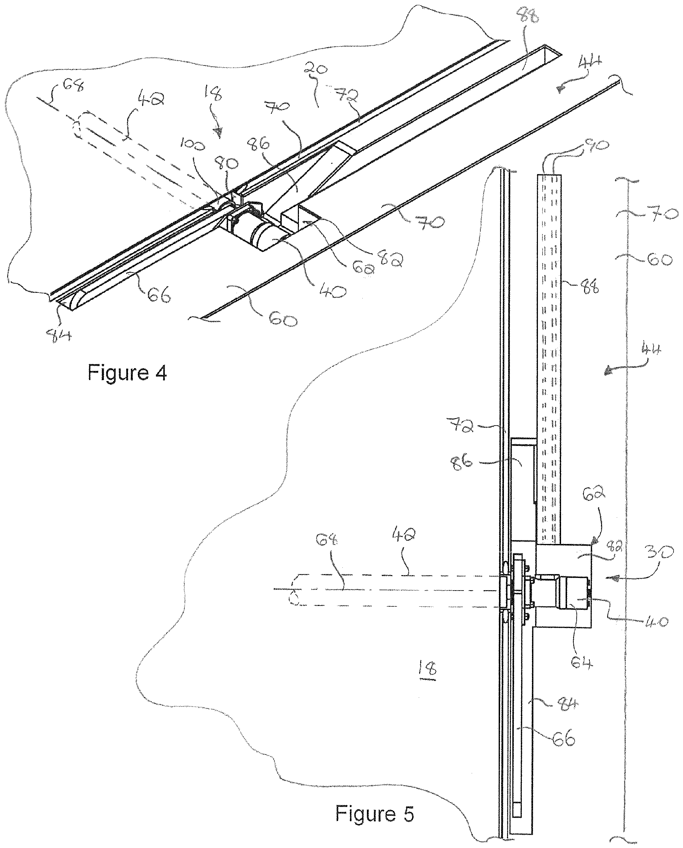

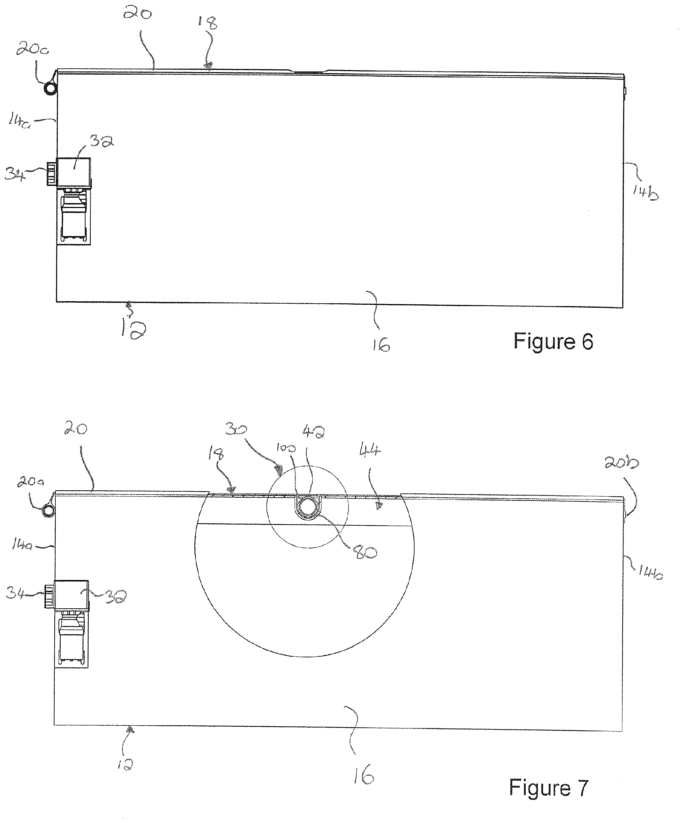

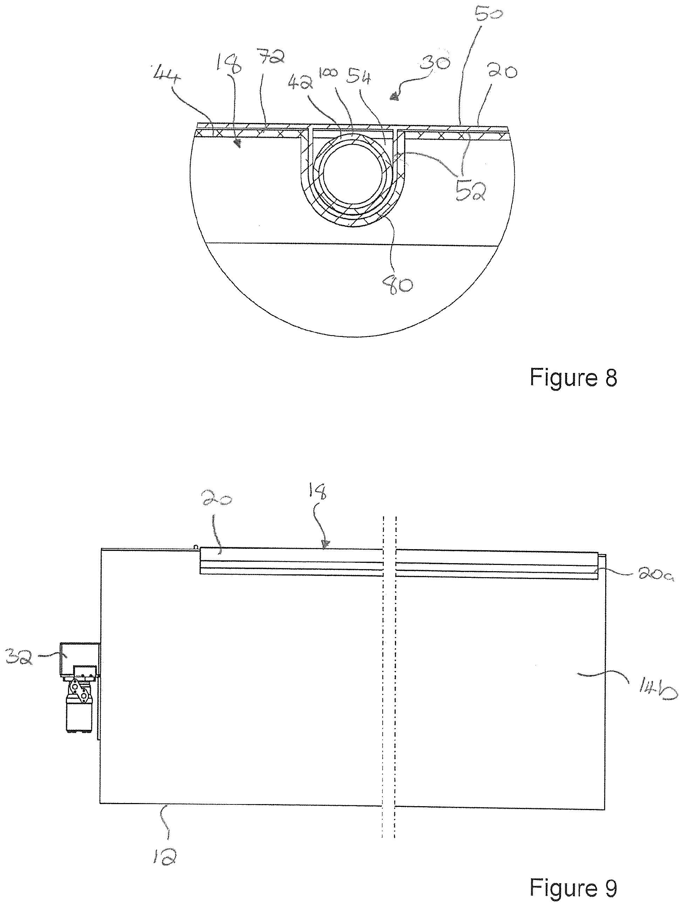

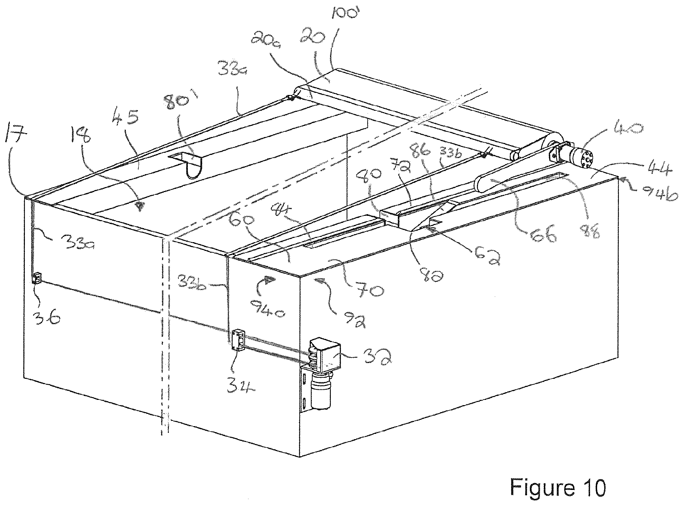

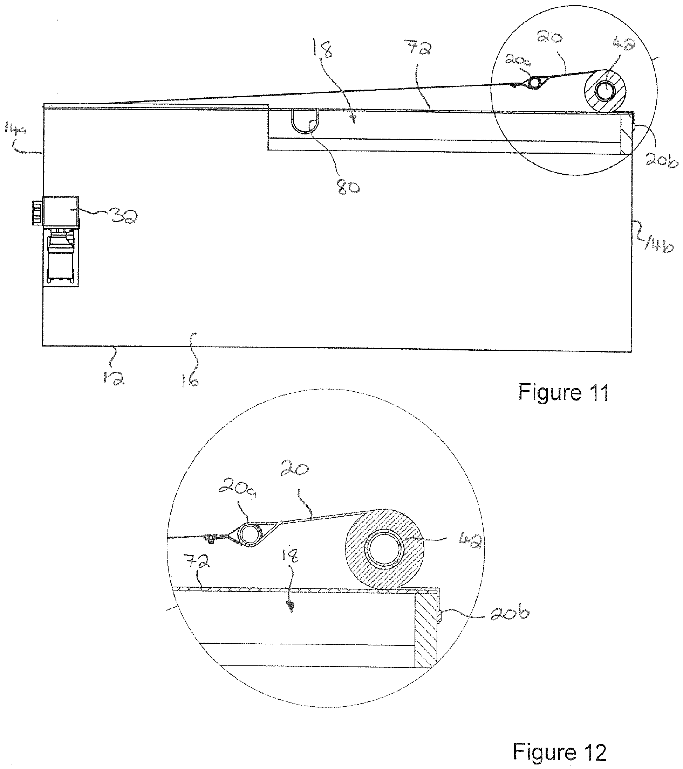

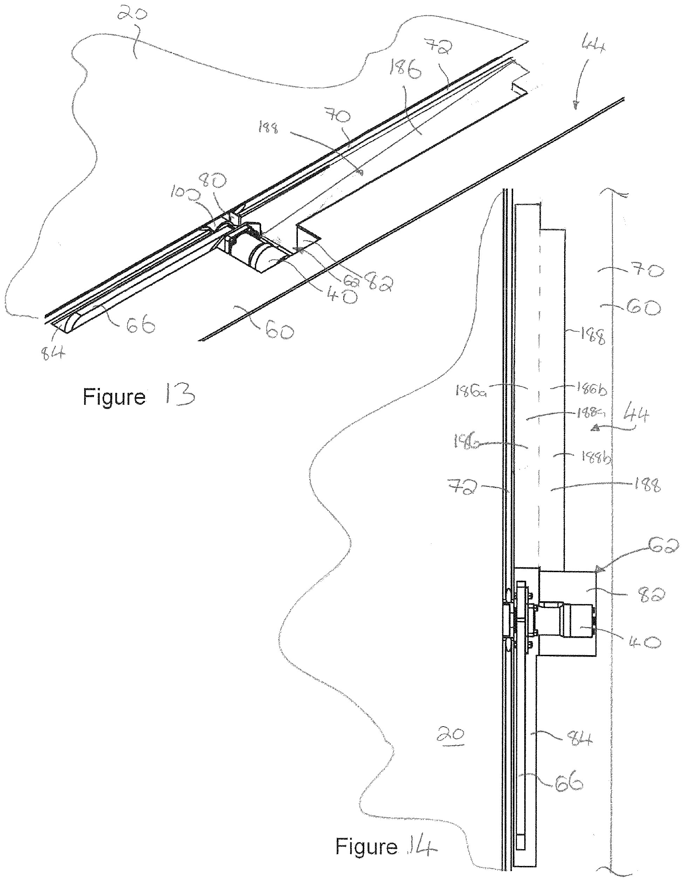

A plan view of the arrangement shown in Figure 2 is provided in Figure 3. A perspective and plan view of the cover system 30 is shown in Figures 4, 5 respectively. Figure 6 shows a view of the end wall 16 of the container 12 with the cover system in a closed configuration. Figure 7 shows the same view as Figure 6, with a cut out section illustrating part of the cover system 30 and sheet 20 in more detail. Figure 8 shows an enlarged view of the detail of the cover system 30 and sheet 20 shown in Figure 7. Figure 9 shows a view of the side wall 14b of the present arrangement. Figures 10, 11 show views similar to that of Figures 2, 7 respectively, with the cover system in an open configuration revealing the opening 18. Figure 12 shows an enlarged view of a region of the cover system as shown in Figure 11. Figures 13, 14 show an alternative arrangement to that shown in Figures 1 to 12.

The cover system 30 comprises an actuator 40 coupled to a sheet guiding rod 42 which extends from the nominal "front" end wall 16 to the nominal "rear" end wall 17 along the longitudinal direction of the container 12 over the opening 18. The sheet guiding rod 42 has a rotational axis 68 which it is operable to rotate around. The sheet guiding rod 42 is shown as a dotted line, hidden beneath the sheet 20 in Figures 2, 3, 4 and 5.

The cover (or tarpaulin, or sheet) 20 covers at least part of the container opening 18. As best shown in Figure 8, the sheet 20 has a top surface 50 which faces away from the container 12 when covering the container opening 18, and a rear surface 52 which faces towards the container 12 when covering the container opening 18. The sheet 20 comprises edges 20a, 20b which are configured to reach to the side walls 14a, 14b of the container 12. That is to say, the sheet 20 is sized such that the edges 20a, 20b of the sheet 20 extend along the side walls 14a, 14b along longitudinal length of the container 12 to cover the opening 18 of the container.

The sheet/cover/tarpaulin 20 is coupled to the sheet guiding rod 42 in at least one region. In particular the sheet 20 is coupled to the sheet guiding rod 42 in at least one region between the edges 20a, 20b of the sheet 20, and the sheet is also coupled to the sheet guiding rod 42 along at least part of the length of the sheet guiding rod 42. Hence the sheet 20 extends transversely away from the longitudinal direction of the rod 42 to its edges 20a, 20b towards, or at, the sides of the container 14a, 14b respectively.

The sheet 20 may be coupled to the sheet guiding rod 42 in a region at least substantially a quarter of the way between the edges 20a, 20b of the sheet 20 and at most substantially half way between the edges 20a, 20b of the sheet 20. The sheet 20 may be coupled to the sheet guiding rod 42 in a region substantially half way between the edges 20a, 20b of the sheet 20.

The sheet guiding rod 42 is coupled to the rear surface 52 of the sheet 20. More specifically, as best shown in Figure 8, the sheet guiding rod 42 is located in a cavity 54 between the rear surface 52 and the top surface 50 of the sheet 20.

The cover system 30 further comprises a housing 44. The housing 44 comprises a panel 60 (or portion) provided with a recess 62 for receiving and guiding the cover system actuator 40.

The actuator 40 may comprise a prime mover 64 which is operable to rotate the sheet guiding rod 42, and a tension/support arm 66 coupled to the prime mover 64 to prevent it rotating relative to the housing 44, and hence relative to the sheet 20. The tension/support arm 66 extends away from the prime mover 64 in a direction at an angle to the axis of rotation 68 of the sheet guiding rod 42. In the example shown the tension/support arm 66 is shown extending substantially at right angles to the rotational axis 68 of the sheet guide rod 42.

The panel 60 comprises an upper surface 70 over part of which the rod 42 is operable to travel. In particular, the upper surface 70 comprises an edge region 72 which is configured to bear an end region 100 of the rod 42 to thereby support the rod 42 as it travels to/from the edge of the container.

As best shown in Figure 8, the panel 60 further comprises a groove 80 (or cut out) 80 for receiving the end region 100 of the sheet guiding rod 42. As best shown in Figure 10, the end wall 17 at the nominal "rear" of the container 12 may also comprise a housing (or panel, or support structure) 45 which defines a groove 80' for receiving an end region 100' of the sheet guiding rod 42 at the nominal "rear" of the container 12. Put another way, a support structure 45 for the sheet guiding rod 52 may be provided distal to the transverse end wall 16 and towards the opposite end of the side walls 14a, 14b to which the housing 44 is provided, the support structure 45 defining the further groove 80' for receiving the sheet guiding rod 42. The further groove 80' may be substantially aligned in the longitudinal direction of the container 12 with the sheet guiding rod groove 80 provided in the housing 44.

The groove 80, and in examples where present, the groove 80', are provided in a position along their respective housings such that they correspond with the location of the position on the sheet 20 at which the sheet guiding rod 42 is attached. Hence the grooves 80, 80' may be provided on their respective housings 44, 45 in a region at least substantially a quarter of the way between the side walls 14a, 14b, and at most substantially half way between the side walls 14a, 14b. The grooves 80, 80' may be provided on their respective housings 44, 45 in a region substantially half way between the side walls 14a, 14b.

The panel recess 62 comprises a primary region 82 for receiving the actuator 40 such that when the actuator 40 is located in the primary region 82 the actuator may be substantially housed flush with or beneath the panel upper surface 70. That is to say, the primary region recess 82 may be deeper than the height of the actuator 40 so that when the actuator 40 sits within the primary region recess 82, it sits below or flush with the panel upper surface 70. In an alternative example, the primary region recess 82 may be sized so that when the actuator 40 sits within the primary region recess 82, it is mainly below the panel upper surface 70, with some of the actuator 40 sitting above the level of the panel upper surface.

The panel recess 62 further comprises a channel 84 which extends away from the primary region 82 in a first direction such that it is aligned with, and hence configured to receive the tension/support arm 66. In the example shown the channel 84 extends away from the primary region 82 parallel to the end wall 16.

The panel recess 62 further comprises a ramp 86, 186 which extends from the primary region 82 away from the channel 84 towards the panel upper surface 70. The ramp 86, 186 is configured to guide the tension/support arm 66 from the channel 84 to the panel upper surface 70. The ramp 86 terminates adjacent/proximate to the groove 80 at one end of the primary recess region 82. Hence the ramp 86 defines part of a guide path for the tension/support arm 66 of the actuator 40 between an open and closed position/configuration of the sheet 20.

In one example, as shown in Figures 2 to 5, 10, the panel recess 62 further comprises a supply channel region 88 which extends away from the primary region 82. In the example shown the supply channel 88 extends away from the primary region 82 in a direction substantially opposite to the direction in which the channel 84 extends. The supply channel region 88 may extend parallel to the ramp 86. In the example shown the supply channel 88 extends in the direction of travel of the actuator 40. That is to say, the channel 84 may extend away from the primary region 82 towards the side wall 14a of the container 12 and the supply channel 88 may extend from the primary region 82 towards the side wall 14b of the container 12. The supply channel 88 is configured for receiving supply cable/pipes which power the actuator 40. The supply cable/pipes are shown as dotted line 90 in Figure 5, but omitted from the remaining Figures for clarity. Hence the cable/pipes 90 may lift out of the way as the actuator 40 approaches them (i.e. when the cover 20 is opening), and drawn back into the supply channel 88 as the actuator 40 moves towards and then sits within the primary region 82 (i.e. when the cover 20 is closing).

In an alternative example, shown in Figures 13, 14, the ramp 186 is also configured to guide the tension/support arm 66 from the channel 84 to the panel upper surface 70. The ramp 186 defines a base of a ramp recess 188 in the panel 60 which may extend substantially the full extent of the path which, in use, the actuator 40 will travel as it passes along the edge 72. Additionally the ramp recess 188 defines space to accommodate supply cable/pipes which power the actuator 40. Put another way, the ramp recess 188 which defines the ramp 186 is configured to guide the tension/support arm 66 and to accommodate supply cable/pipes which power the actuator 40. That is to say, the ramp recess 188 has a first section 188a which corresponds to a ramp first section 186a which configured to guide the tension/support arm 66, and the ramp recess 188 also has a second section 188b, adjacent the first section 186a, which corresponds to a ramp second section 186b which is configured to accommodate supply cable/pipes which power the actuator 40. The ramp first section 186a and ramp second section 186b are shown divided by a dotted line in Figure 14, although the dotted line does not represent a physical barrier.

The panel 60 extends at least part of the length of the end wall 16. The panel may extend the full length of the end wall 16. The panel 60 may not extend beyond the side walls 14a, 14b of the container 12. The housing may further comprise a front wall 92 which may, or may not, be integral with the end wall 16 of the container 12. The housing may further comprise side walls 94a, 94b which extend from the side edges of the panel 60 and may be integral with the side walls 14a, 14b of the container 12 respectively. That is to say, the front wall 92 and side walls 94a, 94b of the housing 44 surround the periphery of the panel 60 into which the recesses 82, 84, 88 and ramp 86 are formed. Additionally, there may also be provided a bottom wall (not shown) which extends between the front wall 92 and side walls 94a, 94b to cover the underside of the panel 60.

The cover system may be operated remotely by a user, for example via a control unit (not shown).

In operation the actuator 40 rotates the sheet guiding rod 42 around its rotational axis 68 relative to the groove 80 and the edge 72 of the housing 44 to thereby wind the sheet 20 onto/off the sheet guiding rod 42. In this way the sheet is drawn between a closed configuration and an open configuration. A closed configuration is one in which the sheet 20 covers the opening 18 of the container 12, in which the end region 100 of the rod 42 is located in the panel groove 80, for example as shown in Figure 2. An open configuration is one in which the cover 20 is drawn to one side to expose the opening 18 of the container 12, for example as shown in Figure 10.

In a closed configuration, as shown in Figure 2, with the sheet guiding rod 42 located in the panel groove 80, the rod 42 sits beneath, or flush with, the upper surface 70 of the panel 60 so that the sheet 20 may provide a substantially flat or uninterrupted surface, and so that the side edge of the sheet 20 (i.e. the edge at the nominal "front" of the container 12) is urged towards and/or in contact with the upper surface 70 of the housing 44.

To open the cover, the actuator 40 is controlled to rotate the sheet guiding rod 42 to wind the sheet 20 around the sheet guiding rod 42, thereby drawing the actuator 40 and end region 100 of the sheet guiding rod 42 free of the groove 80 and along the edge 72 of the housing 44 towards the side wall 14b of the container 12, as shown in Figures 10, 11, 12. At the same time, in examples where present, the other end region 100' of the sheet guide rod 42 is drawn free of the other groove 80'. Hence the sheet 20 is drawn with the sheet guide rod 42 across the opening 18 of the container 12 exposing the container opening 18, and hence allowing material to be placed within the container 12 from outside via the opening 18. In the same action the tension/support arm 66 moves with the actuator 40 and is guided from the channel 84 up the ramp 86 to move along a region of the upper surface 70 of the panel 60 adjacent the edge 72. At the same time cables/pipes 90 are bent out of the way from the supply channel 88 by virtue of the motion of the actuator 40 towards them (not shown).

Closing the cover 20 over the opening 18 is the reverse process. The actuator 40 rotates the sheet guide rod 42 in an opposite direction to the opening action to unwind the sheet 20 from the sheet guiding rod 42 over the opening 18, in part under the influence of the tensioning system 32 which, via webbing straps 33a, 33b attached to the edge 20a of the sheet ensures the edge 20a of the sheet 20 travels neatly towards the side wall 14a.

The sheet guiding rod 42 moves along the edge 72 of the panel 60 until it meets the groove 80. Likewise, in examples where present, at the same time the end region 100' of the sheet guiding rod 42 at the rear of the container 12 is moved along the rear wall 17 of the container 12 until it meets its respective groove 80'. During the same motion the tension arm 66 moves along the upper surface 70 of the panel 60 and down the ramp 86 to enter the channel 84. At the same time cables/pipes 90 are drawn into the supply channel 88 by virtue of the motion of the actuator 40 back to the primary region 82.

The end 100 of the sheet guiding rod 42 moves into the groove 80, allowing the actuator 40 to locate in the primary region 82. Hence in the closed position, the end region 100 of the sheet guiding rod 42 sits in the groove 80 and the actuator 40 is seated in the primary region 82 of the recess 62. At the same time, in examples where present, the end region 100' of the sheet guiding rod 42 at the rear of the container 12 sits in its respective groove 80'.

The housing may be formed integrally with the side walls 14a, 14b and end wall 16 of the container. Alternatively the housing 44 may be fabricated separately and joined to the walls 14a, 14b, 16 of the container 12. The shape and form of the actuator 40 and tension/guide arm 66 may have a different configuration to that shown in the example, as may the orientation of the channel 84 and supply channel 88. For example the supply channel 88 may be provided on the same side as the channel 84, with the supply cables being drawn and rewound in some form of sprung spool arrangement.

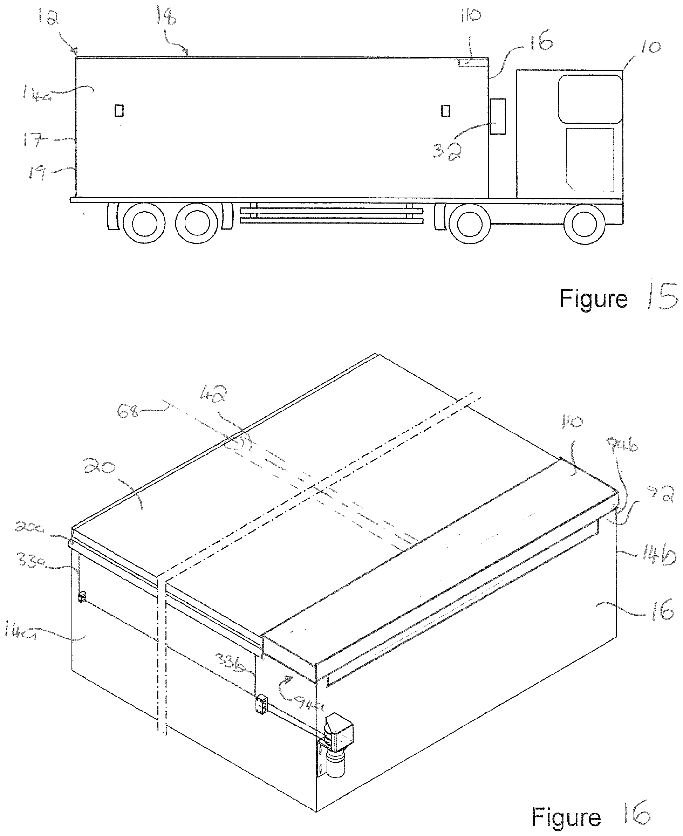

As shown in Figures 15 to 18 the cover system 30 may also comprise a lid 110. The lid 110 is configured to cover the panel 60. That is to say, the lid 110 is configured to cover at least the recessed surface of the housing 44. As shown in the Figures, the lid 110 may be sized to cover the recess 62, and hence the actuator 40, the channel 84, the ramp 86, 186, and (where present) the supply channel 88. The lid 110 thus shields the actuator 40 from the elements (i.e. wind, rain, snow etc) and foreign body impact, as well as assisting with streamlining the arrangement, and increasing its aesthetic appeal.

The lid 110 may be mounted to the housing 44 and/or end wall 16 by a hinge 112 such that the lid 110 may pivot relative to the housing 44 and/or end wall 16.

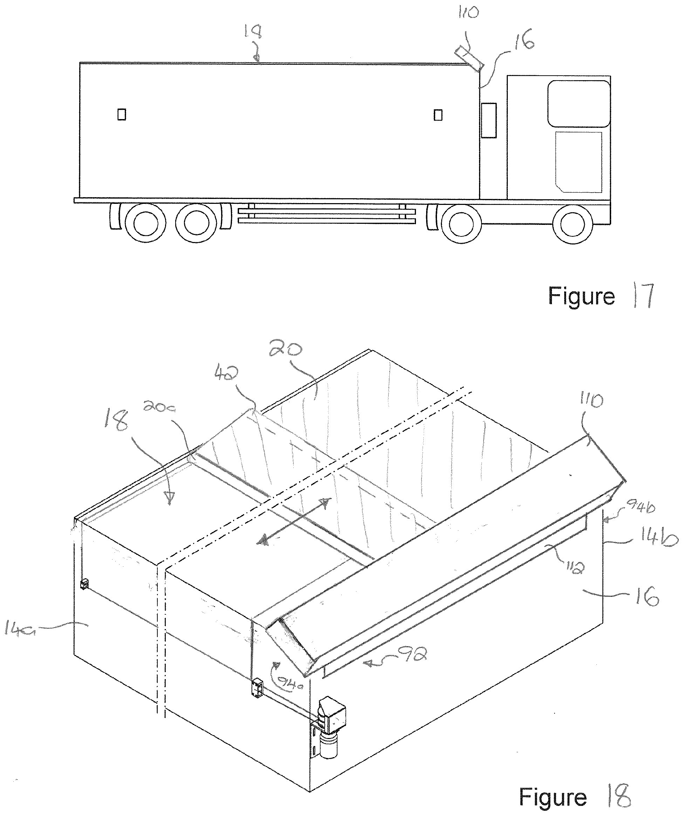

In operation, as shown in Figures 17, 18, the lid 110 is lifted to uncover the actuator 40 and provide enough space for the actuator 40 and sheet guiding rod 42 to move along the edge 72. An actuator mechanism (not shown) may be provided to pivot the lid 110 out of the way of the actuator 40. Alternatively, the actuator 40 may engage with the lid 110 as it rises free of the groove 80 to push a free edge of the lid 110 away from the panel 60, to thereby pivot the lid 110 out of the way of the actuator 40 and so provide space for the actuator 40 to move along the edge 72.

The lid 110 may be provided to cover any of the arrangements herein described.

Hence there is provided an automated cover system 30 comprising a housing 44, the cover system 30 configured for a container for a vehicle (e.g. a heavy goods vehicle).

The system 30 may be used to quickly deploy a cover 20 over an opening 18 of a container 12, and operated to quickly uncover the opening.

It may be operated remotely by a user, so that the user can work from a safe location.

Since the actuator 40 of the cover system 30 is mounted to an end wall of a container 12, and configured to translate across the top of the container 12 without raising significantly above the height of the container 12, it provides a compact solution which does not impinge on container height and width, thereby satisfying UK and European Regulations on size limits of such a system.

As the housing 44 encases the actuation system, it may provide aerodynamic advantages for the vehicle as a whole. It may also provide foreign object damage protection for moving parts of the system (for example the prime mover 64 and tension arm 66). Additionally the housing 44 provides protection for the supply cable/pipes 90 from aerodynamic forces and foreign object damage.

The housing 40 may also increase the aesthetic appeal of the cover and trailer system as a whole.

## Claims

1. A housing (44) for a transport container cover system (30),
the container (12) having longitudinal side walls (14a,14b) and a transverse end wall (16) which define an opening (18) on the top side of the container (12);
the container cover system (30) having an actuator (40) coupled to a sheet guiding rod (42) which extends along the longitudinal direction of the container (12) across the opening (18);
the housing (44) being provided on an end wall (16) of the container (12), and
the housing (44) comprising :
a panel (60) provided with a recess (62) for receiving the cover system (30) actuator (40) the panel (60) comprising an upper surface (70) along part of which the rod (42) is operable to travel,
**characterized in that**:
the panel (60) comprises :
a groove (80) for receiving the sheet guiding rod (42); and
the panel (60) recess (62) comprises :
a primary region (82) for receiving the actuator (40).

2. A housing (44) as claimed in claim 1 wherein
a tension arm (66) extends away from the actuator (40); and
the panel (60) recess (62) further comprises :
a channel (84) extending away from the primary region (82) in a first direction and configured to receive the tension arm (66); and
a ramp (86) which extends from the primary region (82) away from the channel (84) and towards the panel (60) upper surface (70),
the ramp (86) configured to guide the tension arm (66) from the channel (84) to the panel (60) upper surface (70).

3. A housing (44) as claimed in any one of claims 1 or 2 wherein the panel (60) recess (62) further comprises :
a supply channel (88) region which extends away from the primary region (82) in a second direction, and
the supply channel (88) is configured to receive supply cables/pipes for the operation of the actuator (40).

4. A housing (44) as claimed in any one of the preceding claims, wherein :
the panel (60) extends along at least part of the length of the container end wall (16).

5. A housing (44) as claimed in any one of the preceding claims further comprising:
a front wall (92) which extends from a leading edge of the panel (60); and
side walls (94a, 94b) which extend from side edges of the panel (60);
such that the front wall (92) and side walls (94a, 94b) surround the periphery of the panel (60).

6. A cover system (30) for a transport container (12) :
the container (12) having longitudinal side walls (14a, 14b) and a transverse end wall (16) which define an opening (18) on the top side of the container (12);
the cover system (30) comprising :
an actuator (40) coupled to a sheet guiding rod (42) which extends along the longitudinal direction of the container (12) over the opening (18); and
a housing (44) as claimed in any one of claims 1 to 5.

7. A cover system (30) as claimed in claim 6 further comprising :
a support structure (45) provided distal to the transverse end wall (16) and towards the opposite end of the side walls (14a, 14b) to which the housing (44) is provided;
the support structure (45) defining a further groove (80') for receiving the sheet guiding rod (42);
the further groove (80') being substantially aligned in the longitudinal direction of the container (12) with the sheet guiding rod (42) groove (80) provided in the housing (44).

8. A cover system (30) as claimed in claim 6 or claim 7 wherein :
the cover system (30) further comprises a sheet (20) for covering at least part of the container (12) opening (18),
the sheet (20) having :
a top surface which faces away from the container (12) when covering the container opening (18); and
a rear surface which faces towards the container (12) when covering the container opening (18);
the sheet (20) being coupled to the sheet guiding rod (42)
in at least one region between edges of the sheet (20) and
along at least part of the length of the sheet guiding rod (42),
the sheet extending transverse from the longitudinal direction of
the rod (42) to its edges towards, or at, the side walls of the container (12).

9. A cover system (30) as claimed in claim 8 wherein :
the sheet (20) is coupled to the sheet guiding rod (42) in a region substantially half way between the edges of the sheet (20).

10. A cover system (30) as claimed in any one of claims 8 to 9 wherein :
the sheet guide rod (42) is coupled to the rear surface (52) of the sheet (20); or
the sheet guide rod (42) is located in a cavity (54) between the rear surface (52) and the top surface (50) of the sheet (20).

11. A cover system (30) as claimed in any one of claims 8 to 10 wherein:
the actuator (40) is operable to rotate the sheet guiding rod (42)
to thereby wind the sheet onto/off the sheet guiding rod (42)
to thereby draw the sheet (20) between :
a closed configuration in which the sheet (20) covers the container opening (18), and
an open configuration in which the container opening (18) is exposed.

12. A cover system (30) as claimed in any one of claims 6 to 11 further comprising :
a lid (110) configured to cover the panel (60).

13. A method of operation of a cover system (30) as claimed in any one of claims 6 to 12 wherein:
the actuator (40) is controlled to rotate the sheet guiding rod (42) to wind the sheet onto/off the sheet guiding rod (42), and
thereby draw the sheet (20) between :
a closed configuration in which the sheet (20) covers the opening (18), and
an open configuration in which the container opening (18) is exposed.

14. A transport container (12) for a vehicle comprising :
longitudinal side walls (14a, 14b) and a transverse end wall (16) which define an opening (18) on the top side of the container (12); and
a cover system (30) as claimed in any one of claims 6 to 12.

## Patentansprüche

1. Gehäuse (44) für ein Transportcontainerabdeckungssystem (30),
wobei der Container (12) Längsseitenwände (14a, 14b) und eine Querendwand (16), die eine Öffnung (18) auf der Oberseite des Containers (12) definieren, aufweist;
wobei das Containerabdeckungssystem (30) einen Aktuator (40) aufweist, der mit einer Flächengebildeführungsstange (42), die sich entlang der Längsrichtung des Containers (12) über die Öffnung (18) erstreckt, gekoppelt ist;
wobei das Gehäuse (44) an einer Endwand (16) des Containers (12) vorgesehen ist; und
das Gehäuse (44) ein Paneel (60) umfasst, das mit einer Ausnehmung (62) zur Aufnahme des Aktuators (40) des Abdeckungssystems (30) versehen ist,
wobei das Paneel (60) eine obere Fläche (70) umfasst, wobei die Stange (42) entlang einem Teil davon zur Bewegung betreibbar ist,
**dadurch gekennzeichnet, dass**
das Paneel (60) eine Nut (80) zur Aufnahme der Flächengebildeführungsstange (42) umfasst; und
die Ausnehmung (62) des Paneels (60) einen Primärbereich (82) zur Aufnahme des Aktuators (40) umfasst.

2. Gehäuse (44) nach Anspruch 1, wobei
sich ein Spannarm (66) von dem Aktuator (40) weg erstreckt; und
die Ausnehmung (62) des Paneels (60) ferner Folgendes umfasst:
einen Kanal (84), der sich in eine erste Richtung von dem Primärbereich (82) weg erstreckt und dazu konfiguriert ist, den Spannarm (66) aufzunehmen; und
eine Rampe (86), die sich von dem Primärbereich (82) von dem Kanal (84) weg und zu der oberen Fläche (70) des Paneels (60) hin erstreckt,
wobei die Rampe (86) dazu konfiguriert ist, den Spannarm (66) von dem Kanal (84) zu der oberen Fläche (70) des Paneels (60) zu führen.

3. Gehäuse (44) nach Anspruch 1 oder 2, wobei die Ausnehmung (62) des Paneels (60) ferner Folgendes umfasst:
einen Versorgungskanal(88)-Bereich, der sich in eine zweite Richtung von dem Primärbereich (82) weg erstreckt, und
wobei der Versorgungskanal (88) dazu konfiguriert ist, Versorgungskabel/-rohre für den Betrieb des Aktuators (40) aufzunehmen.

4. Gehäuse (44) nach einem der vorhergehenden Ansprüche, wobei:
sich das Paneel (60) entlang mindestens einem Teil der Länge der Containerendwand (16) erstreckt.

5. Gehäuse (44) nach einem der vorhergehenden Ansprüche, ferner umfassend:
eine Vorderwand (92), die sich von einem vorderen Rand des Paneels (60) erstreckt; und
Seitenwände (94a, 94b), die sich von Seitenrändern des Paneels (60) erstrecken;
so dass die Vorderwand (92) und die Seitenwände (94a, 94b) den Umfang das Paneels (60) umgeben.

6. Abdeckungssystem (30) für einen Transportcontainer (12) :
wobei der Container (12) Längsseitenwände (14a, 14b) und eine Querendwand (16), die eine Öffnung (18) auf der Oberseite des Containers (12) definieren, aufweist;
wobei das Abdeckungssystem (30) Folgendes umfasst:
einen Aktuator (40), der mit einer Flächengebildeführungsstange (42), die sich entlang der Längsrichtung des Containers (12) über die Öffnung (18) erstreckt, gekoppelt ist; und
ein Gehäuse (44) nach einem der Ansprüche 1 bis 5.

7. Abdeckungssystem (30) nach Anspruch 6, ferner umfassend:
eine Stützstruktur (45), die distal von der Querendwand (16) und zu dem gegenüberliegenden Ende der Seitenwände (14a, 14b), an denen das Gehäuse (44) vorgesehen ist, hin vorgesehen ist;
wobei die Stützstruktur (45) eine weitere Nut (80') zur Aufnahme der Flächengebildeführungsstange (42) definiert;
wobei die weitere Nut (80') im Wesentlichen in der Längsrichtung des Containers (12) ausgerichtet ist, wobei die Nut (80) der Flächengebildeführungsstange (42) in dem Gehäuse (44) vorgesehen ist.

8. Abdeckungssystem (30) nach Anspruch 6 oder Anspruch 7, wobei:
das Abdeckungssystem (30) ferner ein Flächengebilde (20) zur Abdeckung mindestens eines Teils der Öffnung (18) des Containers (12) umfasst,
wobei das Flächengebilde (20) Folgendes aufweist:
eine Oberseite, die von dem Container (12) weg weist, wenn sie die Containeröffnung (18) bedeckt; und
eine Rückseite, die zu dem Container (12) weist, wenn sie die Containeröffnung (18) bedeckt;
das Flächengebilde (20) in mindestens einem Bereich zwischen den Rändern des Flächengebildes (20) und entlang mindestens einem Teil der Länge der Flächengebildeführungsstange (42) mit der Flächengebildeführungsstange (42) gekoppelt ist,
wobei sich das Flächengebilde (20) quer von der Längsrichtung der Stange (42) zu seinen Rändern in Richtung der oder an den Seitenwände(n) des Containers (12) erstreckt.

9. Abdeckungssystem (30) nach Anspruch 8, wobei:
das Flächengebilde (20) in einem Bereich im Wesentlichen in der Mitte zwischen den Rändern des Flächengebildes (20) mit der Flächengebildeführungsstange (42) gekoppelt ist.

10. Abdeckungssystem (30) nach einem der Ansprüche 8 bis 9, wobei:
die Flächengebildeführungsstange (42) mit der Rückseite (52) des Flächengebildes (20) gekoppelt ist; oder
sich die Flächengebildeführungsstange (42) in einem Hohlraum (54) zwischen der Rückseite (52) und der Oberseite (50) des Flächengebildes (20) befindet.

11. Abdeckungssystem (30) nach einem der Ansprüche 8 bis 10, wobei:
der Aktuator (40) dahingehend betreibbar ist, die Flächengebildeführungsstange (42) zu drehen, um dadurch das Flächengebilde auf die bzw. von der Flächengebildeführungsstange (42) zu wickeln und dadurch das Flächengebilde (20) zwischen:
einer geschlossenen Konfiguration, in der das Flächengebilde (20) die Containeröffnung (18) bedeckt, und
einer offenen Konfiguration, in der die Containeröffnung (18) freigelegt ist,
zu ziehen.

12. Abdeckungssystem (30) nach einem der Ansprüche 6 bis 11, ferner umfassend:
einen Deckel (110), der dazu konfiguriert ist, das Paneel (60) zu bedecken.

13. Verfahren zum Betreiben eines Abdeckungssystems (30) nach einem der Ansprüche 6 bis 12, wobei:
der Aktuator (40) dahingehend gesteuert wird, die Flächengebildeführungsstange (42) zu drehen, um das Flächengebilde auf die bzw. von der Flächengebildeführungsstange (42) zu wickeln, und dadurch das Flächengebilde (20) zwischen:
einer geschlossenen Konfiguration, in der das Flächengebilde (20) die Öffnung (18) bedeckt, und
einer offenen Konfiguration, in der die Containeröffnung (18) freigelegt ist,
zu ziehen.

14. Transportcontainer (12) für ein Fahrzeug, umfassend:
Längsseitenwände (14a, 14b) und eine Querendwand (16), die eine Öffnung (18) auf der Oberseite des Containers (12) definieren; und
ein Abdeckungssystem (30) nach einem der Ansprüche 6 bis 12.

## Revendications

1. Boîtier (44) pour un système de couverture pour conteneur de transport (30),
le conteneur (12) ayant des parois latérales longitudinales (14a, 14b) et une paroi d'extrémité transversale (16) qui définissent une ouverture (18) sur le côté supérieur du conteneur (12);
le système de couvercle pour conteneur (30) ayant un actionneur (40) couplé à une tige de guidage de feuille (42) qui s'étend le long de la direction longitudinale du conteneur (12) à travers l'ouverture (18) ;
le boîtier (44) étant prévu sur une paroi d'extrémité (16) du conteneur (12), et
le boîtier (44) comprenant:
un panneau (60) muni d'un évidement (62) pour recevoir l'actionneur (40) du système de couvercle (30) ;
le panneau (60) comprenant une surface supérieure (70) le long de laquelle la tige (42) est conçue pour être déplacée,
**caractérisé en ce que**:
le panneau (60) comprend:
une rainure (80) pour recevoir la tige de guidage de feuille (42); et l'évidement (62) du panneau (60) comprend:
une région primaire (82) pour recevoir l'actionneur (40).

2. Boîtier (44) selon la revendication 1 dans lequel,
un bras de tension (66) s'éloigne de l'actionneur (40); et
l'évidement (62) du panneau (60) comprend en outre:
un canal (84) s'étendant à partir de la région primaire (82) dans une première direction et configuré pour recevoir le bras de tension (66); et
une rampe (86) qui s'étend de la région primaire (82) à partir du canal (84) et vers la surface supérieure (70) du panneau (60),
la rampe (86) étant configurée pour guider le bras de tension (66) depuis le canal (84) vers la surface supérieure (70) du panneau (60).

3. Boîtier (44) selon l'une quelconque des revendications 1 et 2, dans lequel l'évidement (62) du panneau (60) comprend en outre:
une région de canal d'alimentation (88) qui s'étend depuis la région primaire (82) dans une seconde direction, et
le canal d'alimentation (88) est configuré pour recevoir des câbles/conduites d'alimentation pour le fonctionnement de l'actionneur (40).

4. Boîtier (44) selon l'une quelconque des revendications précédentes, dans lequel:
le panneau (60) s'étend sur au moins une partie de la longueur de la paroi d'extrémité du conteneur (16).

5. Boîtier (44) selon l'une quelconque des revendications précédentes comprenant en outre:
une paroi frontale (92) qui s'étend à partir d'un bord avant du panneau (60); et
des parois latérales (94a, 94b) qui s'étendent à partir des bords latéraux du panneau (60);
de telle sorte que la paroi frontale (92) et les parois latérales (94a, 94b) entourent la périphérie du panneau (60).

6. Système de couverture (30) pour un conteneur de transport (12):
le conteneur (12) ayant des parois latérales longitudinales (14a, 14b) et une paroi d'extrémité transversale (16) qui définissent une ouverture (18) sur le côté supérieur du conteneur (12);
le système de couverture (30) comprenant:
un actionneur (40) couplé à une tige de guidage de feuille (42) qui s'étend le long de la direction longitudinale du conteneur (12) sur l'ouverture (18); et
un boîtier (44) selon l'une quelconque des revendications 1 à 5.

7. Système de couverture (30) selon la revendication 6, comprenant en outre:
une structure de support (45) disposée distalement par rapport à la paroi d'extrémité transversale (16) et vers l'extrémité opposée des parois latérales (14a, 14b) sur laquelle le boîtier (44) est disposé;
la structure de support (45) définissant une rainure supplémentaire (80') pour recevoir la tige de guidage de feuille (42);
la rainure supplémentaire (80') étant sensiblement alignée dans la direction longitudinale du conteneur (12) avec la rainure (80) de la tige de guidage de feuille (42) disposée dans le boîtier (44).

8. Système de couverture (30) selon la revendication 6 ou la revendication 7, dans lequel:
le système de couverture (30) comprend en outre une feuille (20) pour couvrir au moins une partie de l'ouverture (18) du conteneur (12),
la feuille (20) ayant:
une surface supérieure qui est tournée à l'opposé du conteneur (12) lorsqu'elle recouvre l'ouverture (18) du conteneur; et
une surface arrière qui est orientée vers le conteneur (12) lorsqu'elle recouvre l'ouverture (18) du conteneur;
la feuille (20) étant couplée à la tige de guidage de feuille (42)
dans au moins une région entre les bords de la feuille (20) et sur au moins une partie de la longueur de la tige de guidage de feuille (42),
la feuille (20) s'étendant transversalement depuis la direction longitudinale de la tige (42) au niveau de ses bords vers, ou au niveau des parois latérales du conteneur (12).

9. Système de couverture (30) selon la revendication 8 dans lequel:
la feuille (20) est couplée à la tige de guidage de feuille (42) dans une région sensiblement médiane entre les bords de la feuille (20).

10. Système de couverture (30) selon l'une quelconque des revendications 8 à 9 dans lequel:
la tige de guidage de feuille (42) est couplée à la surface arrière (52) de la feuille (20); ou
la tige de guidage de feuille (42) est située dans une cavité (54) entre la surface arrière (52) et la surface supérieure (50) de la feuille (20).

11. Système de couverture (30) selon l'une quelconque des revendications 8 à 10 dans lequel:
l'actionneur (40) est conçu pour être actionné pour faire tourner la tige de guidage de feuille (42)
pour ainsi enrouler/dérouler la feuille sur/depuis la tige de guidage de la feuille (42)
pour ainsi déplacer la feuille (20) entre:
une configuration fermée dans laquelle la feuille (20) recouvre l'ouverture (18) du conteneur, et
une configuration ouverte dans laquelle l'ouverture (18) du conteneur est exposée.

12. Système de couverture (30) selon l'une quelconque des revendications 6 à 11 comprenant en outre:
un couvercle (110) configuré pour recouvrir le panneau (60).

13. Procédé de fonctionnement d'un système de couverture (30) selon l'une quelconque des revendications 6 à 12 dans lequel:
l'actionneur (40) est commandé pour faire tourner la tige de guidage de feuille (42) pour enrouler/dérouler la feuille sur/depuis la tige de guidage de feuille (42), et
déplacer ainsi la feuille (20) entre:
une configuration fermée dans laquelle la feuille (20) recouvre l'ouverture (18), et
une configuration ouverte dans laquelle l'ouverture (18) du conteneur est exposée.

14. Conteneur de transport (12) pour un véhicule comprenant:
des parois latérales longitudinales (14a, 14b) et une paroi d'extrémité transversale (16) qui définissent une ouverture (18) sur le côté supérieur du conteneur (12); et
un système de couverture (30) selon l'une quelconque des revendications 6 à 12.
